**Europäisches Patentamt**

**European Patent Office**

**Office européen des brevets**

(19)

(11) Publication number : **0 345 001 B1**

(12)

# EUROPEAN PATENT SPECIFICATION

(45) Date of publication of patent specification :
16.12.92 Bulletin 92/51

(51) Int. Cl.⁵ : **F16H 57/00, F16F 1/38**

(21) Application number : **89305400.7**

(22) Date of filing : **30.05.89**

(54) **Noise and vibration damper for a transmission shift lever.**

(30) Priority : **02.06.88 US 201508**

(43) Date of publication of application :
**06.12.89 Bulletin 89/49**

(45) Publication of the grant of the patent :
**16.12.92 Bulletin 92/51**

(84) Designated Contracting States :
**DE FR GB SE**

(56) References cited :
**DE-A- 2 362 504
DE-A- 2 406 131
DE-A- 3 231 407
US-A- 4 092 078
US-A- 4 646 585**

(73) Proprietor : **DANA CORPORATION
4500 Dorr Street
Toledo, OH 43615 (US)**

(72) Inventor : **Schultz, Donald C.
404 Northdale Drive
Toledo Ohio 43612 (US)**
Inventor : **Kodem, James G.
5001 South Avenue No. 182
Toledo Ohio 43615 (US)**

(74) Representative : **Cheyne, John Robert
Alexander Mackenzie et al
HASELTINE LAKE & CO. 28 Southampton
Buildings Chancery Lane
London WC2A 1AT (GB)**

## Description

## BACKGROUND OF THE INVENTION

The present invention relates generally to shift levers for effecting gear changing operations in manually operable vehicle transmissions. In particular, the present invention relates to a noise and vibration damper for such a shift lever.

In most vehicles, a transmission is provided in the drive train between the engine and the driven wheels. As is well known, the transmission includes a plurality of gears which are selectively engaged to provide a plurality of speed reduction gear ratios between the input and the output of the transmission. A control member within the transmission is moved by a driver of the vehicle throughout a plurality of gear ratio positions for selecting the desired speed reduction. As a result, acceleration and deceleration of the vehicle can be achieved in a smooth and efficient manner.

In many smaller vehicles, such as automobiles, the transmission functions automatically. In other words, the shifting of the control member between the various gear ratio positions in the transmission is accomplished automatically by a control system without any intervention by the driver of the vehicle. However, an automatic transmission is not used in many larger vehicles, such as trucks, because of the increased size and expense. Such larger vehicles are, therefore, often provided with a manually operable transmission, one in which the shifting of the control member between the various gear ratio positions is accomplished by physical movement of the vehicle driver.

In order to shift the control member between the gear ratio positions in a manual transmission, a mechanical shift lever assembly is generally provided. A lower end of the shift lever assembly extends downwardly within the transmission into engagement with the control member, while the other end extends upwardly into an area which is convenient for the vehicle driver to grasp and manipulate it. Thus, when the upper end of the shift lever assembly is moved by the vehicle driver, the lower end is also moved within the transmission. By properly moving the upper end of the shift lever assembly, the vehicle driver may position the control member of the transmission to select any one of the plurality of gear ratios for use.

When the vehicle is operated, it has been found that the transmission and other components of the drive train of the vehicle vibrate to a certain extent. Also, vibrations are generated by the vehicle engine itself during operation. All of such vibrations can be sensed as undesirable noise by the vehicle driver. To reduce the amount of this vibratory noise sensed by the driver, the compartment of the vehicle in which the vehicle driver is located is typically lined with acoustical insulating material. Unfortunately, the shift lever assembly must extend upwardly from the transmission into such driver compartment for convenient use. As a result, the shift lever assembly transmits these vibrations into the driver compartment, thereby defeating the acoustical insulation. Thus, it would be desirable to provide the shift lever assembly with a vibration and noise dampening mechanism which reduces or prevents the vibrations of the engine and the transmission from being transmitted by the shift lever assembly into the driver compartment of the vehicle.

US-A-4,092,078 discloses an elastic connection of an axial joint with the connecting linkage of a motor vehicle steering gear. The elastic connection is intended to ensure a noiseless transmission of axial forces and may be considered to operate as a damper for connecting an end of a first lever member to an end of a second lever member. The damper comprises a hollow housing having first and second open ends and a first hollow liner disposed within the housing adapted to receive therein the end of the first lever member extending through the first open end of the housing, the first liner being spaced apart from the housing to define a first radially extending space therebetween, a vibration damping material being disposed in the first radially extending space for connecting the first liner to the housing.

According to the present invention, there is provided a damper further comprising a second hollow liner disposed within the housing adapted to receive therein the end of the second lever member extending through the second open end of the housing, the second liner being spaced apart from the housing to define a second radially extending space therebetween, the liners being spaced apart from each other to define an axially extending space therebetween; and vibration dampening material disposed in the axially extending and second radially extending spaces for connecting the liners to the housing.

In a preferred embodiment of the present invention there is provided a noise and vibration damper for a shift lever assembly in a manually operable vehicle transmission. A lower shift lever member is connected to the transmission for effecting gear changing operations. The upper end of the lower shift lever member extends upwardly from the transmission and is adapted to be connected to the lower end of an upper shift lever member by means of the noise and vibration damper. The damper includes a hollow cylindrical housing having upper and lower pairs of aligned, transversely extending apertures formed therethrough. The upper end of the lower shift lever member extends upwardly into the lower end of the damper housing past the lower pair of apertures, while the lower end of the upper shift lever member extends downwardly into the upper end of the damper housing past the upper pair of apertures. A transversely extending pin extends through apertures formed in the ends of each of the upper and lower shift lever members and through their respective pair of apertures to secure the shift lever members to the housing. The ends of the pins are supported within the apertures by nylon bushings. The ends of the upper and lower shift lever members are spaced apart from one another and from the damper housing by a hollow cylindrical sleeve of vibration dampening material, such as polyurethane. The polyurethane is injected into the housing and molded about the ends of the shift lever members so as to acoustically isolate them from one another. A collar is provided about both the upper and lower ends of the damper housing to provide positive stops for the shift lever members when they are moved.

It is an object of the present invention to provide an improved noise and vibration damper for a shift lever assembly in a manually operable vehicle transmission.

It is another object of the present invention to provide such a damper in which a lower vibrating member is acoustically isolated from an upper non-vibrating member by injection molded polyurethane.

It is a further object of the present invention to provide such a damper which is simple and inexpensive in construction.

For a better understanding of the present invention and to show how it may be carried into effect, reference will now be made, by way of example, to the accompanying drawings in which:

Fig. 1 is an elevational view of a transmission shift lever assembly in accordance with the present invention.

Fig. 2 is an enlarged sectional elevational view of the noise and vibration damper illustrated in Fig. 1.

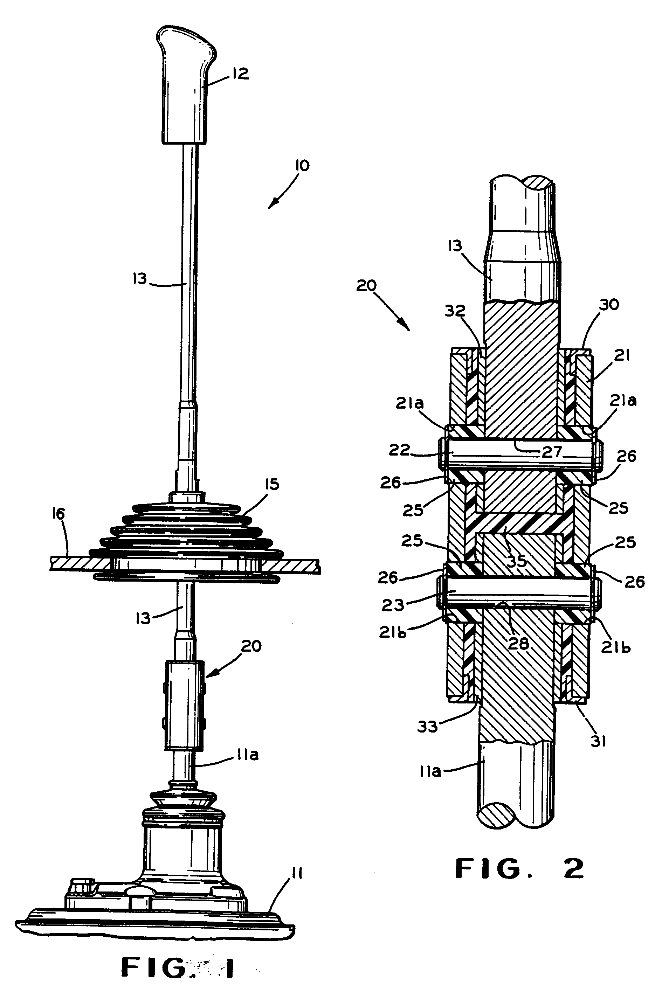

Referring now to the drawings, there is illustrated in Fig. 1 a shift lever assembly, indicated generally at 10, in accordance with the present invention. The shift lever assembly 10 is connected for use with a conventional manually operable vehicle transmission 11. As is well known in the art, the transmission 11 includes a plurality of gears (not shown) which are selectively engaged to provide a plurality of speed reduction gear ratios between the input and the output of the transmission 11. A control member (not shown) within the transmission 11 is moved by a driver of the vehicle throughout a plurality of gear ratio positions for selecting the desired speed reduction. A lower shift lever member 11a is connected to the control member of the transmission 11 for moving such control member between the various gear ratio positions. Thus, by moving the lower shift lever member 11a, the transmission 11 can be operated to provide a desired gear ratio between the input and output thereof. As will be explained in greater detail below, the shift lever assembly 10 is provided to permit a driver of the vehicle to easily move the lower shift lever member 11a. The shift lever assembly 10 includes a handle 12 mounted on the upper end of an elongated upper shift lever member 13. The handle 12 is sized to be easily grasped by the driver of the vehicle. The upper shift lever member 13 extends downwardly from the handle 12 through a flexible elastomeric boot 15 mounted in a relatively large diameter hole formed through a floor, schematically illustrated at 16. The floor 16 can function as a divider between the driver compartment of the vehicle (above the floor 16) and the engine and drive train compartment (below the floor 16). If desired, appropriate acoustical insulating material (not shown) may be incorporated into the floor 16 to reduce the amount of undesirable noise rising from the engine compartment and entering the driver compartment.

Beneath the floor 16, the upper shift lever member 13 extends further downwardly into engagement with a noise and vibration damper, indicated generally at 20. Similarly, the upper end of the lower shift lever member 11a extends into engagement with the damper 20 as well. As shown in the drawings, the lower end of the upper shift lever member 13 is received within the upper end of the damper 20, while the upper end of the lower shift lever member 11a is received within the lower end of the damper 20. The structure and operation of the damper 20 is explained in detail below.

Referring now to Fig. 2, it can be seen that the damper 20 includes an outer metallic cylindrical housing 21 having a pair of upper apertures 21a and a pair of lower apertures 21b formed therethrough. The upper apertures 21a are oriented in opposed fashion on the housing 21 so as to define a common axis therethrough, which is transverse relative to the housing 21. The lower apertures 21b are similarly oriented. Upper and lower metallic pins 22 and 23 extend through the respective upper and lower apertures 21a and 21b. The ends of the pins 22 and 23 are supported within the respective apertures 21a and 21b by bushings 25. The bushings 25 are formed from a rigid, low friction material, such as nylon. A snap ring 26 is disposed in a circumferential groove formed near each end of both of the pins 22 and 23 to retain the bushings 25 thereon.

As mentioned above, the lower end of the upper shift lever member 13 is received within the upper end of the housing 21. An aperture 27 is formed through the lower end of the upper shift lever member 13, which is adapted to be aligned with the upper apertures 21a. When so aligned, the upper pin 22 extends through such apertures 27 and 21a to retain the lower end of the upper shift lever member 13 within the housing 21. Similarly, an aperture 28 is formed through the upper end of the lower shift lever member 11a. The aperture 28 is adapted to be aligned with the lower apertures 21a to permit the lower pin 23 to extend therethrough to retain the upper end of the lower shift lever member 11a within the housing 21. The bushings 25 are sized such that they abut the outer circumferential surfaces of the upper and lower shift lever members 13 and 11a, respectively, when installed as shown. As a result, the upper and lower shift lever members 13 and 11a, respectively, are reliably secured to the housing 21 so as to prevent them from being withdrawn therefrom without first detaching the snap rings 26 and removing the pins 22 and 23.

Upper and lower annular metallic collars 30 and 31 are respectively secured to the upper and lower open ends of the housing 21. Each of the collars 30 and 31 is generally L-shaped in cross section, having a first portion extending axially along the inner circumferential surface of the housing 21 and a second portion extending over the adjacent end of the housing 21. Within the upper and lower collars 30 and 31 and within the housing 21, upper and lower hollow cylindrical metallic liners 32 and 33 are provided. The upper liner 32 extends co-axially downwardly from the upper collar 30 within the housing 21, while the lower liner 33 extends co-axially upwardly from the lower collar 31 within the housing 21.

The upper and lower liners 32 and 33 are located concentrically within and are spaced apart from the housing 21 and the collars 30 and 31. Thus, annular radially extending spaces are defined between the outer circumferential surfaces of both the upper and lower liners 32 and 33 and the inner circumferential surfaces of the housing 21 and the collars 30 and 31. The size of each radial space is somewhat reduced at the upper and lower ends of the housing 21 because the axially extending portions of the collars 30 and 31 define inner circumferential surfaces which are smaller in diameter than the housing 21. The upper and lower liners 32 and 33 do not abut or engage one another, but rather are spaced apart to define a disc-shaped axially extending space therebetween.

A noise and vibration dampening material 35 is disposed within radially and axially extending spaces described above. The material 35 fills the radially extending spaces defined between the liners 32 and 33 and the housing 21 and between the liners 32 and 33 and the collars 30 and 31. The material 35 also fills the axially extending space defined between the liners 32 and 33. In the preferred embodiment, the material 35 consists of polyurethane. The material 35 may be provided within the housing 21 as shown by conventional injection molding techniques, wherein the material 35 is forced under pressure through an injection aperture (not shown) formed through the housing 21 when the other components of the damper 20 are assembled and maintained as shown. During the injection process, the upper and lower shift lever members 13 and 11a themselves or conventional plugs may be used to prevent the material 35 from entering within the liners 32 and 33.

When the vibration dampening material 35 is injected into the damper 20, it securely adheres the liners 32 and 33 to the housing 21. The upper and lower shift lever members 13 and 11a may then be inserted within the respective upper and lower liners 32 and 33 and retained therein by the pins 22 and 23. The outer diameters of the shift lever members 13 and 11a are only slightly smaller than the inner diameters of the respective liners 32 and 33, thereby providing a good slip fit therein without play. Once inserted within the liners 32 and 33, the shift lever members 13 and 11a are secured to the housing 21 by the pins 22 and 23 as described above.

The damper 20 is effective in greatly reducing the amount of vibration transmitted from the lower shift lever member 11a to the upper shift lever member 13 and, therefore, the amount of noise transmitted into the driver compartment of the vehicle. This occurs because the upper shift lever member 13 is acoustically isolated from the vibrating lower shift lever member 11a. Such acoustical isolation is primarily provided by the vibration dampening material 35, which absorbs most of such vibration. The nylon bushings 25 isolate the pins 22 and 23 from the housing 21 to further reduce the amount of transmitted vibration.

Despite the fact that the damper 20 accomplishes this reduction in transmitted vibration, the shift lever assembly 10 of the present invention retains a firm "feel" during use. In other words, the upper shift lever member 13 is not greatly angled or tilted relative to the lower shift lever member 11a when it is grasped and moved by the driver of the vehicle. The upper and lower collars 30 and 31 function as positive stops when such angling or tilting occurs, since they define inner diameters which are smaller than the inner diameter of the housing 21.

In accordance with the provisions of the patent statutes, the principle and mode of operation of the present invention have been explained and illustrated in its preferred embodiment.

## Claims

1. A damper (20) for connecting an end of a first lever member (13) to an end of a second lever member (11a) comprising:

a hollow housing (21) having first and second open ends; and

a first hollow liner (32) disposed within the housing (21) adapted to receive therein the end of the first lever member (13) extending through the first open end of the housing (21), the first liner (32) being spaced apart from the housing (21) to define a first radially extending space therebetween, a vibration damping material (35) being disposed in the first radially extending space for connecting the first liner (32) to the housing (21), characterized in that the damper (20) further comprises:

a second hollow liner (33) disposed within the housing (21) adapted to receive therein the end of the second lever member (11a) extending through the second open end of the housing (21), the second liner (32) being spaced apart from the housing (21) to define a second radially extending space therebetween, the liners (32, 33) being spaced apart from each other to define an axially extending space therebetween; and

vibration damping material (35) disposed in the axially extending and second radially extending spaces for connecting the liners (32, 33) to the housing (21).

2. A damper (20) as claimed in claim 1, characterised in that there is further provided an annular collar means (30, 31) connected about at least one of the first and second open ends of the housing (21).

3. A damper (20) as claimed in claim 2, characterised in that the collar means (30, 31) includes a portion extending axially along an inner surface of the housing (21), thereby reducing the radially extending space.

4. A damper (20) as claimed in any one of the preceding claims, characterised in that a collar means (30, 31) is connected about both of the first and second open ends of the housing (21).

5. A damper (20) as claimed in any one of the preceding claims, characterised in that there is provided means (21a,21b,22,23,27,28) for retaining at least one of the ends of the first and second lever members (13, 11a) within the housing (21).

6. A damper (20) as claimed in claim 5, characterised in that the retaining means includes a pair of apertures (21a, 21b) formed through the housing (21) and a pin (22, 23) extending through the pair of apertures (21a, 21b), the pin (22, 23) being adapted to extend through an aperture (27, 28) formed through the end of the lever member (13, 11a) and through the housing apertures (21a, 21b) to retain the lever member (13, 11a) within the housing (21).

7. A damper (20) as claimed in claim 6, characterised in that the retaining means further includes a bushing (25) for supporting each end of the pin (22, 23) within the aperture (27, 28).

8. A damper (20) as claimed in claim 7, characterised in that the retaining means further includes a snap ring (26) secured in a groove formed adjacent each end of the pin (22, 23) for retaining each of the bushings (25) thereon.

9. A damper (20) as claimed in any one of the preceding claims, characterised in that a retaining means is provided for retaining each of the lever members (13, 11a) within the housing (21).

10. A damper (20) as claimed in any one of the preceding claims, characterised in that the vibration damping material (35) is polyurethane.

**Patentansprüche**

1. Dämpfungseinrichtung (20) zum Verbinden von einem Ende eines ersten Hebels (13) mit einem Ende eines zweiten Hebels (11a), mit einem hohlen Gehäuse (21) mit ersten und zweiten offenen Enden, einem ersten hohlen Mantel (32), der im Gehäuse (21) angeordnet ist und das Ende des ersten Hebels (13) aufnehmen kann, der sich durch das erste offene Ende des Gehäuses (21) erstreckt, wobei der erste Mantel (32) im Abstand vom Gehäuse (21) angeordnet ist, um einen ersten radial verlaufenden Raum dazwischen zu bilden, einem schwingungsdämpfenden Material (35), das in dem ersten radial verlaufenden Raum angeordnet ist, um den ersten Mantel (32) mit dem Gehäuse (21) zu verbinden, **dadurch gekennzeichnet**, daß die Dämpfungseinrichtung (20) einen zweiten hohlen Mantel (33) aufweist, der im Gehäuse (21) angeordnet ist und das Ende des zweiten Hebels (11a) aufnehmen kann, der sich durch das zweite offene Ende des Gehäuses (21) erstreckt, daß der zweite Mantel (32) im Abstand vom Gehäuse (21) angeordnet ist, um einen zweiten radial verlaufenden Raum dazwischen zu bilden, daß die Mäntel (32, 33) einen Abstand voneinander haben, um einen axial verlaufenden Raum dazwischen zu bilden, und daß ein schwingungsdämpfendes Material (35) in dem axial verlaufenden und in dem zweiten radial verlaufenden Raum angeordnet ist, um die Mäntel (32, 33) mit dem Gehäuse (21) zu verbinden.

2. Dämpfungseinrichtung (20) nach Anspruch 1, **dadurch gekennzeichnet**, daß ein ringförmiger Kragen (30, 31) vorgesehen ist, der um wenigstens eines der ersten und zweiten offenen Enden des Gehäuses (21) angeordnet und angebracht ist.

3. Dämpfungseinrichtung (20) nach Anspruch 2, **dadurch gekennzeichnet**, daß der Kragen (30, 31) einen Abschnitt umfaßt, der sich axial längs einer Innenfläche des Gehäuses (21) erstreckt, wodurch der radial verlaufende Raum reduziert wird.

4. Dämpfungseinrichtung (20) nach einem der vorhergehenden Ansprüche, **dadurch gekennzeichnet**, daß ein Kragen (30, 31) um das erste und das zweite offene Ende des Gehäuses (21) angeordnet und angebracht ist.

5. Dämpfungseinrichtung nach einem der vorhergehenden Ansprüche, dadurch gekennzeichnet, daß Einrichtungen (21a, 21b, 22, 23, 27, 28) vorgesehen sind, um wenigstens eines der Enden der ersten und zweiten Hebel (13, 11a) in dem Gehäuse (21) zu halten.

6. Dämpfungseinrichtung (20) nach Anspruch 5, **dadurch gekennzeichnet**, daß die Halteeinrichtungen ein Paar von Öffnungen (21a, 21b) umfassen, die durch das Gehäuse (21) ausgebildet sind sowie Stifte (22, 23), die sich durch die Öffnungen (21a, 21b) erstrecken, daß ferner die Stifte (22, 23) sich durch eine Öffnung (27, 28), die durch das Ende der Hebel (13, 11a) ausgebildet sind, und durch die Gehäuseöffnungen (21a, 21b) erstrecken, um die Hebel (13, 11a) im Gehäuse (21) zu halten.

7. Dämpfungseinrichtung (20) nach Anspruch 6, **dadurch gekennzeichnet**, daß die Halteeinrichtungen weiterhin eine Büchse (25) aufweisen, um jedes Ende der Stifte (22, 23) in der Öffnung (27,28) abzustützen.

8. Dämpfungseinrichtung nach Anspruch 7, **dadurch gekennzeichnet**, daß die Halteeinrichtungen ferner einen Schnappring (26) aufweisen, der in einer Nut sitzt, die angrenzend an jedes Ende der Stifte (22, 23) ausgebildet ist, um jede der Büchsen (25) darauf zu halten.

9. Dämpfungseinrichtung (20) nach einem der vorhergehenden Ansprüche, **dadurch gekennzeichnet**, daß eine Halteeinrichtung vorgesehen ist, um jeden Hebel (13, 11a) in dem Gehäuse (21) zu halten.

10. Dämpfungseinrichtung (20) nach einem der vorhergehenden Ansprüche, **dadurch gekennzeichnet**, daß das schwingungsdämpfende Material (35) Polyurethan ist.

**Revendications**

1. Amortisseur (20) de connexion d'une extrémité d'un premier élément formant levier (13) à une extrémité d'un second élément formant levier (11a), et comprenant :
   un premier logement creux ou boîtier (21) avec une première et une seconde extrémités ouvertes; et
   un première couche creuse (32) disposée à l'intérieur du logement (21) et adaptée à recevoir dans celle-ci l'extrémité du premier élément formant levier (13) qui s'étend au travers de la première extrémité ouverte du logement (21), la première couche (32) étant espacée du logement (21) afin de définir un premier espace s'étendant radialement entre ceux-ci, un matériau d'amortissement des vibrations (35) étant disposé dans le premier espace s'étendant radialement afin de connecter la première couche (32) au logement (21), caractérisé en ce que l'amortisseur (20) comprend en outre :
   une seconde couche creuse (33) disposée à l'intérieur du logement (21) et adaptée à recevoir dans celle-ci l'extrémité du second élément formant levier (11a) qui s'étend au travers de la seconde extrémité ouverte du logement (21), la seconde couche (32) étant à distance du logement (21) afin de définir un second espace s'étendant radialement entre ceux-ci, les couches (32,33) étant espacées l'une de l'autre afin de définir un espace s'étendant axialement entre celles-ci; et
   un matériau amortisseur de vibrations (35) étant disposé dans l'espace s'étendant axialement et le second espace s'étendant radialement, afin de connecter les couches (32,33) au logement (21).

2. Amortisseur (20) selon la revendication 1, caractérisé en ce qu'il comprend en outre des moyens formant colliers annulaires (30, 31) connectés autour d'au moins l'une des première et seconde extrémités du logement (21).

3. Amortisseur (20) selon la revendication 2, caractérisé en ce que les moyens formant colliers (30, 31) comprennent une portion s'étendant axialement suivant la longueur d'une surface interne du logement (21) afin de réduire ainsi l'espace s'étendant radialement.

4. Amortisseur (20) selon l'une quelconque des revendications précédentes, caractérisé en ce que les moyens formant colliers (30, 31) sont connectés autour de chacune des première et secondes extrémités du logement (21).

5. Amortisseur (20) selon l'une quelconque des revendications précédentes, caractérisé en ce que l'on prévoit des moyens (21a, 21b, 22, 23, 27 et 28) pour retenir au moins l'une des extrémités des premier et second moyens formant levier (13, 11a) à l'intérieur du logement (21).

6. Amortisseur (20) selon la revendication 5, caractérisé en ce que les moyens de rétention comprennent une paire d'ouvertures (21a, 21b) formées au travers du logement (21) ainsi qu'un plot (22, 23) s'étendant au travers d'une paire d'ouvertures (21a, 21b), les plots (22, 23) étant adaptés à s'étendre au travers d'ouvertures (27, 28) formées au travers des extrémités des éléments formant levier (13, 11a) et au travers des ouvertures du logement (21a, 21b) afin de retenir les éléments formant levier (13, 11a) à l'intérieur de ce logement (21).

7. Amortisseur (20) selon la revendication 6, caractérisé en ce que les moyens de rétention comprennent en outre un palier (25) apte à supporter chacune des extrémités des plots (22, 23) à l'intérieur des ouvertures (27, 28).

8. Amortisseur (20) selon la revendication 7, caractérisé en ce que les moyens de rétention comprennent en outre un anneau élastique (26) fixé dans une gorge formée de façon adjacente à chaque extrémité du plot (22, 23) afin de retenir chacun des paliers (25) sur ceux-ci.

9. Amortisseur (20) selon l'une quelconque des revendications précédentes, caractérisé en ce qu'un moyen de rétention est prévu pour retenir chacun des éléments formant levier (13, 11a) à l'intérieur du logement (21).

10. Amortisseur (20) selon l'une quelconque des revendications précédentes, caractérisé en ce que le matériau amortisseur des vibrations (35) est du polyuréthane.

FIG. 1

FIG. 2